# FASCICULE DE BREVET EUROPEEN

(11) **EP 4 034 823 B1**
(45) Date de publication et mention de la délivrance du brevet: **10.07.2024**
(21) Numéro de dépôt: 20768364.0
(22) Date de dépôt: 15.09.2020
(51) Int. Cl.: F25D 17/00, F25D 17/04, F25D 23/06, A23C 3/05, A23L 3/36, B65D 81/18, A23L 3/3418

(54) **CELLULE DE STOCKAGE D'UN ENSEMBLE DE PRODUITS DANS LAQUELLE EST MIS EN OEUVRE UN FLUX D'AIR A TRAVERS L'ENSEMBLE DE PRODUITS ET QUI EST EQUIPEE D'UN DISPOSITIF D'ETANCHEITE GONFLABLE**
ZELLE ZUM AUFBEWAHREN EINES SATZES VON PRODUKTEN, IN DER EIN LUFTSTROM DURCH DEN SATZ VON PRODUKTEN IMPLEMENTIERT WIRD UND DER MIT EINER AUFBLASBAREN DICHTUNG AUSGESTATTET IST
CELL FOR STORING A SET OF PRODUCTS IN WHICH AN AIR FLOW THROUGH THE SET OF PRODUCTS IS IMPLEMENTED AND WHICH IS EQUIPPED WITH AN INFLATABLE SEALING DEVICE

(30) Priorité: 27.09.2019 FR 1910751
(43) Date de publication de la demande: 03.08.2022
(73) Titulaire: Fromfroid, 62360 Isques (FR)
(72) Inventeur: PAUPARDIN, M. Benoît, 62830 CARLY (FR)
(74) Mandataire: Matkowska, Franck
(86) Numéro de dépôt international: PCT/EP2020/075717
(87) Numéro de publication internationale: WO 2021/058326

(56) Documents cités:
- WO-A1-2019/174985
- FR-A1- 2 938 242

## Description

### Domaine technique

La présente invention concerne le stockage d'un ensemble de produits dans une cellule de stockage, dans laquelle est mis en oeuvre un flux d'air circulant à travers l'ensemble de produits, et notamment, mais pas exclusivement, un flux d'air réversible, ladite cellule de stockage étant équipée d'un dispositif d'étanchéité gonflable perfectionné. Elle trouve notamment son application pour le stockage temporaire d'un ensemble de produits alimentaires, tels que par exemple et de manière non exhaustive des produits alimentaires lactés ou non, de type yaourts fermentés, yaourts fermiers, yogourts, crèmes dessert, fromages, fruits, légumes, plats préparés, levure, compotes, jus de fruits, desserts non lactés, beurre, avec une modification ou un maintien de la température et/ou de l'humidité des produits au moyen dudit flux d'air.

### Art antérieur

Dans le domaine agroalimentaire, il est connu d'utiliser des cellules de stockage, telles que celles décrites dans la demande de brevet internationale WO99/11141, dans la demande de brevet français FR2871222, dans la demande de brevet internationale WO2019/174985, ou dans la demande de brevet français FR2938242, pour réaliser le stockage temporaire d'un ensemble de produits, en particulier de produits alimentaires, et par exemple de produits laitiers ou non laitiers tels que par exemple des yaourts, yoghourts, fromages ,..., conditionnés et positionnés sur un support de stockage notamment de type palette, rack ou chariot, avec mise en oeuvre d'un flux d'air conditionné à travers cet ensemble de produits de manière à ajuster la température et/ou l'humidité des produits.

Ce flux d'air peut par exemple être un flux d'air froid ayant une température contrôlée et le cas échéant un taux d'humidité relative contrôlé, de manière à permettre le refroidissement ou la conservation à basse température des produits, tels que par exemple des yaourts fermentés, des yogourts, des fromages, le cas échéant avec une humidité contrôlée des produits.

Ce flux d'air peut également être un flux d'air chaud ayant une température contrôlée et le cas échéant un taux d'humidité relative contrôlé, de manière à permettre le chauffage des produits, le cas échéant avec une humidité contrôlée des produits. Ce type de flux d'air chaud est par exemple utilisé pour stoker des produits fermentables, tels que par exemple des yaourts fermiers, en les chauffant de manière à les faire fermenter pendant leur séjour dans la cellule avec une durée de fermentation contrôlée.

Ce flux d'air peut également être un flux d'air à la température des produits, le cas échéant avec un taux d'humidité relative contrôlé, de manière à permettre le maintien en température des produits pendant la durée de stockage dans la cellule, le cas échéant avec une humidité contrôlée des produits.

Dans les demandes de brevet internationales WO99/11141 et WO2019/174985 et dans la demande de brevet français FR2871222, le flux d'air est créé au moyen d'au moins un ventilateur, qui est positionné en partie arrière de la cellule de stockage et qui en fonctionnement permet de souffler un flux d'air de l'arrière vers l'avant de la cellule. Afin de de canaliser et forcer le flux d'air à travers l'ensemble de produits positionnés dans la cellule de stockage, une étanchéité sur le dessus et sur les deux côtés de l'ensemble de produits est réalisée au moyen respectivement de trois bâches d'étanchéité, qui se gonflent sous l'action des pressions d'air dans la cellule de stockage lorsque le ventilateur fonctionne et qui, en se gonflant, viennent se plaquer contre l'ensemble de produits de manière à réaliser une étanchéité sur le dessus et sur les deux côtés de l'ensemble de produits. Grâce à la mise en oeuvre de cette étanchéité, un flux d'air est ainsi forcé à circuler de l'arrière vers l'avant de la cellule à travers l'ensemble des produits.

Dans ce type de cellule de stockage, le gonflage de la bâche d'étanchéité supérieure et de chaque bâche d'étanchéité latérale ne peut être obtenu qu'en présence de l'ensemble de produits positionnés dans la cellule. En effet, la présence de cet ensemble de produits dans la cellule permet de créer une perte de charge suffisante pour qu'une partie de l'air soufflé par le ventilateur soit déviée en direction de l'espace ménagé entre la bâche d'étanchéité supérieure et la paroi supérieure de la cellule et qu'une partie de l'air soufflé par le ventilateur soit déviée en direction de l'espace ménagé entre chaque bâche d'étanchéité latérale et la paroi latérale correspondante de la cellule, la partie restante de l'air soufflé par le ventilateur arrière passant à travers l'ensemble de produits. Si on fait fonctionner ce ventilateur à l'arrière de la cellule de stockage en l'absence de l'ensemble de produits dans la cellule (c'est-à-dire cellule de stockage vide), dans ce cas le flux d'air soufflé par le ventilateur ne permet pas de gonfler les bâches d'étanchéité supérieure et latérales. En effet en l'absence de l'ensemble de produits dans la cellule, y compris lorsque le ventilateur fonctionne et souffle un flux d'air arrière/avant dans la cellule, la bâche d'étanchéité supérieure et chaque bâche d'étanchéité latérales restent dégonflées.

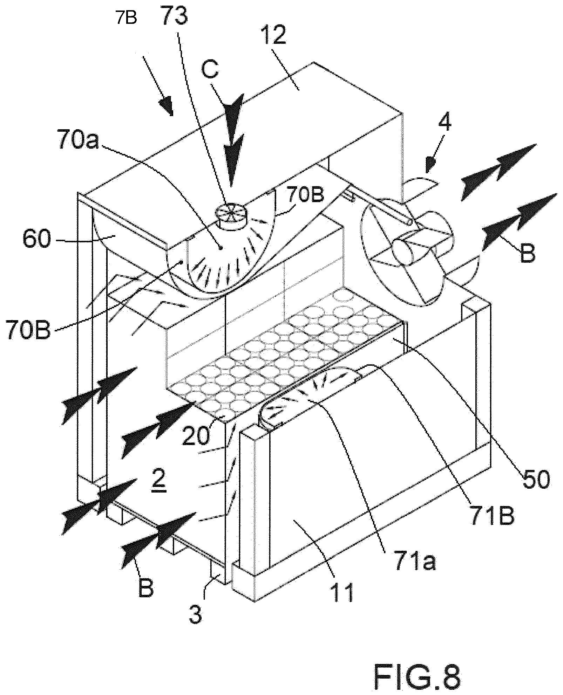

En outre, dans ce type de cellule de stockage même lorsqu'un ensemble de produits est positionné dans la cellule et que le ventilateur souffle un flux d'air arrière/avant, l'air qui pénètre entre la bâche d'étanchéité supérieure et la paroi supérieure permet de gonfler uniquement cette bâche d'étanchéité supérieure par rapport à la paroi supérieure, du fait de la présence des bâches latérales qui s'étendent jusqu'à la paroi supérieure de la cellule (cf.Fig.8), mais ne permet pas de gonfler chaque bâche d'étanchéité latérale par rapport à la paroi latérale correspondante, et vice versa.

Dans la demande de brevet internationale WO2019/174985, la cellule de stockage susvisée, avec bâches d'étanchéité supérieure et latérale, a été perfectionnée en y ajoutant un dispositif d'étanchéité auxiliaire, qui d'une manière générale permet de maintenir les bâches d'étanchéité susvisées au contact de l'ensemble de produits, quel que soit le sens de circulation du flux d'air dans cellule, ce qui avantageusement permet notamment une inversion du sens de circulation du flux d'air dans la cellule. Plus particulièrement, dans une variante particulière de réalisation, ce dispositif d'étanchéité auxiliaire est un dispositif d'étanchéité gonflable pouvant comporter plusieurs boudins d'étanchéité gonflables qui sont distincts et séparés, à savoir par exemple un boudin d'étanchéité supérieur gonflable et au moins deux boudins d'étanchéité latéraux gonflables.

Les cellules de stockage décrites dans la demande de brevet internationale WO99/11141 et dans la demande de brevet français FR2871222 permettent la plupart du temps d'obtenir une très bonne étanchéité et de canaliser de manière efficace le flux d'air arrière/avant à travers un ensemble de produits positionnés dans la cellule de stockage.

Cependant, en cas de mauvais positionnement d'une bâche d'étanchéité latérale par rapport à la bâche d'étanchéité supérieure, il peut y avoir un risque de défaut d'étanchéité dans la région de l'angle supérieur correspondant de la cellule.

Pour tenter de pallier cet inconvénient, on a proposé dans la demande de brevet français FR2938242, de mettre en oeuvre, comme moyens d'étanchéité, un sac gonflable supérieur et des sacs gonflables latéraux permettant de réaliser à l'état gonflé une étanchéité directe ou indirecte sur la face de dessus et sur les faces latérales d'un ensemble de produits positionnés dans la cellule. Les sacs d'étanchéité gonflables sont distincts et séparés, et chaque sac d'étanchéité gonflable est relié par un manchon à un moyen d'insufflation d'air. Dans la solution décrite dans cette publication, on gonfle les sacs d'étanchéité gonflables selon une séquence de gonflage spécifique, au cours de laquelle le sac d'étanchéité supérieur doit impérativement se gonfler avant les sacs d'étanchéité latéraux. La mise en oeuvre de la séquence de gonflage spécifique susvisée complique le gonflage des sacs d'étanchéité gonflables et rend plus complexe la réalisation des moyens de gonflage.

### Objectif de l'invention

La présente invention a pour objectif principal de proposer une cellule de stockage comportant un nouveau dispositif d'étanchéité qui a été perfectionné, et qui notamment ne nécessite pas la mise en oeuvre d'une séquence de gonflage spécifique.

### Résumé de l'invention

L'invention a ainsi pour objet une cellule de stockage, qui est destinée au stockage d'au moins un ensemble de produits, notamment d'un ensemble de produits disposés sur au moins un support de stockage, et plus particulièrement sur au moins un support de stockage de type palette, chariot ou rack.

De manière connue, notamment par la demande de brevet internationale WO2019/174985, ladite cellule comporte deux parois latérales en vis-à-vis et espacées l'une de l'autre et une paroi supérieure délimitant, avec les deux parois latérales, un logement pour l'ensemble de produits ; ledit logement comporte en face avant une ouverture pour l'introduction et/ou le retrait de l'ensemble de produits ; ladite cellule comporte des moyens de ventilation, qui sont aptes à créer un flux d'air arrière/avant (A) circulant dans le logement de l'arrière vers l'avant du logement ou qui sont aptes à créer un flux d'air avant/arrière (B) circulant dans le logement de l'avant vers l'arrière du logement ; ladite cellule comporte un dispositif d'étanchéité gonflable et des moyens de gonflage qui permettent de gonfler le dispositif d'étanchéité gonflable ; le dispositif d'étanchéité gonflable comporte un élément d'étanchéité supérieur gonflable et au moins un élément d'étanchéité latéral gonflable, qui permettent, à l'état gonflé, d'assurer directement ou indirectement une étanchéité entre la paroi supérieure de la cellule et au moins une partie de la face de dessus d'un ensemble de produits positionnés dans la cellule et une étanchéité entre au moins une paroi latérale de la cellule et au moins une partie de l'une des faces latérales d'un ensemble de produits positionnés dans la cellule.

De manière caractéristique selon l'invention, l'élément d'étanchéité supérieur gonflable et l'élément d'étanchéité latéral gonflable délimitent une unique chambre gonflable, et les moyens de gonflage permettent de gonfler l'élément d'étanchéité supérieur gonflable et l'élément d'étanchéité latéral gonflable en insufflant de l'air dans cette chambre gonflable unique. Dans l'invention, à la différence par exemple des bâches d'étanchéité supérieure et latérales des cellules des stockage des publications WO99/11141 et WO2019/174985 susvisées, l'élément d'étanchéité supérieur gonflable et l'élément d'étanchéité latéral gonflable délimitent ladite unique chambre gonflable, indépendamment de la présence d'un ensemble de produits dans la cellule de stockage, et les moyens de gonflage permettent de gonfler l'élément d'étanchéité supérieur gonflable et l'élément d'étanchéité latéral gonflable, indépendamment de la présence d'un ensemble de produits dans la cellule de stockage, en insufflant de l'air dans cette chambre gonflable unique.

En d'autres termes, dans l'invention l'élément d'étanchéité supérieur gonflable et l'élément d'étanchéité latéral gonflable délimitent ladite unique chambre gonflable, y compris en l'absence d'un ensemble de produits dans la cellule de stockage, c'est-à-dire y compris lorsque la cellule est vide, et les moyens de gonflage permettent de gonfler l'élément d'étanchéité supérieur gonflable et l'élément d'étanchéité latéral gonflable en insufflant de l'air dans cette chambre gonflable unique, y compris en l'absence d'un ensemble de produits dans la cellule de stockage, c'est-à-dire y compris lorsque la cellule est vide.

Dans le cadre le plus général de l'invention, un « élément d'étanchéité gonflable » (« élément d'étanchéité supérieur gonflable » et « élément d'étanchéité latéral gonflable ») peut être utilisé pour assurer une étanchéité dite « directe », en étant adapté pour être, à l'état gonflé, directement au contact d'un ensemble de produits positionnés dans la cellule, ou pour assurer une étanchéité dite « indirecte », en étant adapté pour être, à l'état gonflé, au contact d'un ensemble de produits positionnés dans la cellule par l'intermédiaire d'un autre élément d'étanchéité, tel que par exemple une jupe d'étanchéité souple.

Plus particulièrement, et de manière optionnelle, la cellule de stockage de l'invention peut comporter les caractéristiques facultatives énumérées ci-après, et prises isolément ou en combinaison l'une avec l'autre :
- le dispositif d'étanchéité gonflable comporte deux éléments d'étanchéité latéraux gonflables, qui délimitent, avec l'élément d'étanchéité supérieur gonflable, ladite chambre gonflable unique et qui permettent, à l'état gonflé, d'assurer directement ou indirectement une étanchéité respectivement entre chaque paroi latérale de la cellule et au moins une partie de chaque face latérale d'un ensemble de produits positionnés dans la cellule.
- la chambre gonflable comporte au moins une entrée d'air, de préférence une entrée d'air unique, de sorte que l'air insufflé par cette entrée d'air permet le gonflage de l'élément d'étanchéité supérieur gonflable et du ou des éléments d'étanchéité latéraux gonflables.
- cette entrée d'air est réalisée dans l'élément d'étanchéité supérieur gonflable ou dans un élément d'étanchéité latéral gonflable.
- ladite entrée d'air est réalisée dans l'élément d'étanchéité supérieur gonflable, et de préférence est positionnée sensiblement de manière centrale par rapport à l'élément d'étanchéité supérieur gonflable.
- les moyens de gonflage comportent au moins un ventilateur ou un compresseur d'air et ladite chambre gonflable unique comporte au moins une entrée d'air, et de préférence une entrée d'air unique, qui est raccordée au ventilateur ou au compresseur d'air, de sorte que l'air insufflé dans ladite chambre gonflable unique à travers cette entrée d'air, au moyen du ventilateur ou du compresseur d'air, permet le gonflage de l'élément d'étanchéité supérieur gonflable et du ou des éléments d'étanchéité latéraux gonflables.
- le ventilateur ou compresseur d'air des moyens de gonflage est distinct des moyens de ventilation de la cellule.
- ledit ventilateur ou compresseur d'air communique avec ladite chambre gonflable unique par l'intermédiaire d'une entrée d'air réalisée dans l'élément d'étanchéité supérieur gonflable, et de préférence est positionnée sensiblement de manière centrale par rapport à l'élément d'étanchéité supérieur gonflable.
- ledit ventilateur ou ledit compresseur d'air permet d'aspirer de l'air à l'extérieur de la cellule de stockage et de l'insuffler dans la chambre gonflable unique en faisant passer cet air à travers l'une des parois de la cellule, et de préférence à travers la paroi supérieure de la cellule.
- ledit ventilateur ou ledit compresseur d'air est positionné à travers l'une des parois de la cellule et de préférence à travers la paroi supérieure de la cellule, et permet d'insuffler de l'air directement dans la chambre gonflable unique.
- ledit ventilateur ou compresseur d'air est intégré à l'élément d'étanchéité supérieur gonflable ou à un élément d'étanchéité latéral gonflable du dispositif d'étanchéité gonflable, et de préférence est intégré à l'élément d'étanchéité supérieur gonflable.
- l'élément d'étanchéité supérieur gonflable et chaque élément d'étanchéité latéral gonflable sont des pièces distinctes, qui sont assemblées ou aptes à être assemblées l'une avec à l'autre, de manière amovible ou de manière définitive.
- ledit dispositif d'étanchéité gonflable est formé d'une seule pièce.
- ledit dispositif d'étanchéité gonflable est constitué par une ou plusieurs gaines d'étanchéité gonflables, en particulier par une ou plusieurs gaines d'étanchéité souples, et plus particulièrement encore par une ou plusieurs gaines textiles.
- l'élément d'étanchéité supérieur gonflable comporte une gaine supérieure gonflable, qui est fixée à la paroi supérieure de la cellule, et chaque élément d'étanchéité latéral gonflable comporte une gaine latérale gonflable, qui est fixée à l'une des parois latérales de la cellule et qui communique directement et de manière étanche avec la gaine supérieure gonflable, en sorte de former ladite chambre gonflable unique.
- l'élément d'étanchéité supérieur gonflable est fixé à la paroi supérieure de la cellule et chaque élément d'étanchéité latéral gonflable est fixé à l'une des parois latérales de la cellule, de telle sorte que lesdits éléments d'étanchéité gonflables délimitent, avec lesdites parois de la cellule, ladite chambre gonflable unique.
- la cellule comporte une jupe d'étanchéité souple supérieure, qui est fixée à la paroi supérieure de la cellule, de telle sorte que l'élément d'étanchéité gonflable supérieur du dispositif d'étanchéité gonflable est positionné entre cette paroi supérieure et cette jupe d'étanchéité souple supérieure, et ladite jupe d'étanchéité souple supérieure étant apte à se gonfler par rapport à la paroi supérieure de la cellule et vers l'intérieur du logement sous l'effet d'une pression d'air qui est générée dans le logement, en présence d'un ensemble de produits dans la cellule de stockage, par ledit flux d'air créé par les moyens de ventilation de la cellule, et éventuellement avec l'assistance de l'élément d'étanchéité gonflable supérieur en cours de gonflement ou à l'état gonflé.
- la cellule comporte au moins une jupe d'étanchéité souple latérale, qui est fixée à l'une des parois latérales de la cellule gonflable, de telle sorte qu'un élément d'étanchéité gonflable latéral du dispositif d'étanchéité gonflable est positionné entre cette paroi latérale et la jupe d'étanchéité souple latérale, et ladite jupe d'étanchéité souple latérale est apte à se gonfler par rapport à ladite paroi latérale de la cellule et vers l'intérieur du logement sous l'effet d'une pression d'air qui est générée dans le logement, en présence d'un ensemble de produits dans la cellule de stockage, par ledit flux d'air (A) créé par les moyens de ventilation de la cellule, et éventuellement avec l'assistance de l'élément d'étanchéité gonflable latéral en cours de gonflement ou à l'état gonflé.
- les moyens de ventilation sont aptes à créer, de manière non concomitante et de préférence l'un après l'autre, un flux d'air arrière/avant (A) circulant de l'arrière vers l'avant du logement et un flux d'air avant/arrière (B) circulant de l'avant vers l'arrière du logement ou vice et versa.
- la cellule de stockage comporte des moyens de commande qui sont aptes à commander automatiquement les moyens de ventilation et les moyens de gonflage du dispositif d'étanchéité gonflable, de telle sorte que pendant au moins une phase de fonctionnement de la cellule de stockage, les moyens de ventilation génèrent dans le logement un flux d'air (A) qui permet, en présence d'un ensemble de produits dans la cellule de stockage, de gonfler chaque jupe d'étanchéité souple, le dispositif d'étanchéité gonflable pouvant éventuellement, mais pas nécessairement, être gonflé pendant cette phase de fonctionnement.
- la cellule de stockage comporte des moyens de commande qui sont aptes à commander automatiquement les moyens de ventilation et les moyens de gonflage du dispositif d'étanchéité gonflable, de telle sorte que pendant au moins une phase de fonctionnement de la cellule le dispositif d'étanchéité gonflable est gonflé et les moyens de ventilation génèrent dans le logement un flux d'air (B) qui ne permet pas de gonfler la ou les jupes d'étanchéité souples.

L'invention a également pour objet une utilisation de la cellule de stockage susvisée pour ajuster la température et/ou l'humidité d'au moins un ensemble de produits, et notamment d'un ensemble de produits disposés sur au moins un support de stockage, et plus particulièrement sur au moins un support de stockage de type palette, chariot ou rack.

L'invention a également pour objet un procédé de stockage, et plus particulièrement d'ajustement de la température et/ou de l'humidité, d'au moins un ensemble de produits, et notamment d'un ensemble de produits disposés sur au moins un support de stockage, et plus particulièrement sur au moins un support de stockage de type palette, chariot ou rack, au cours duquel on positionne ledit ensemble de produits dans le logement de la cellule de stockage susvisée, puis on gonfle le dispositif d'étanchéité gonflable de manière à réaliser directement ou indirectement une étanchéité entre la paroi supérieure de la cellule et au moins une partie de la face de dessus de l'ensemble de produits positionnés dans la cellule et une étanchéité entre au moins l'une des parois latérales de la cellule et au moins une partie de l'une des faces latérales de l'ensemble de produits positionnés dans la cellule, et de préférence entre les deux parois latérales de la cellule et moins une partie des deux faces latérales opposées de l'ensemble de produits, et on crée un flux d'air arrière/avant (A) circulant à travers l'ensemble de produits de l'arrière vers l'avant de la cellule de stockage ou un flux d'air avant/arrière (B) circulant à travers l'ensemble de produits de l'avant vers l'arrière de la cellule de stockage.

Plus particulièrement, au cours de ce procédé on ajuste de préférence automatiquement la température et/ou l'humidité du flux d'air.

Plus particulièrement, les produits peuvent être des produits non alimentaires ou des produits alimentaires, et plus particulièrement, mais de manière non exhaustive, des produits alimentaires choisis parmi ceux de la liste suivante : produits alimentaires lactés, produits alimentaires non lactés, yaourts fermentés, yaourts fermiers, yogourts, crèmes dessert, fromages, fruits, légumes, plats préparés, levure, compotes, jus de fruits, desserts lactés ou non lactés, beurre.

### Brève description des figures

Les caractéristiques et avantages de l'invention apparaîtront plus clairement à la lecture de la description détaillée ci-après de plusieurs variantes de réalisation conformes à l'invention, laquelle description détaillée est donnée à titre d'exemple non limitatif et non exhaustif de l'invention et en référence aux dessins annexés sur lesquels :
- la figure 1 est une vue d'ensemble isométrique d'une première variante de réalisation d'une cellule de stockage conforme à l'invention, dans laquelle est positionné un ensemble de produits sur palette et est mis en circulation un flux d'air arrière/avant traversant l'ensemble de produits sur palette, et dans laquelle le dispositif d'étanchéité gonflable spécifique de l'invention est dégonflé ;
- la figure 2 représente la cellule de la figure 1, une fois que le dispositif d'étanchéité gonflable spécifique de l'invention a été gonflé ;
- la figure 3 représente la cellule de la figure 1, une fois que le dispositif d'étanchéité gonflable spécifique de l'invention a été gonflé et qu'un flux d'air inverse avant/arrière est mis en circulation à travers l'ensemble de produits sur palette ;
- la figure 4 est une vue d'ensemble éclatée d'une première variante de réalisation d'un dispositif d'étanchéité gonflable, qui est conforme à l'invention et qui correspond à celui de la cellule de stockage des figures 1 à 3 ;
- la figure 5 est une vue d'ensemble du dispositif d'étanchéité gonflable de la figure 4, à l'état dégonflé ;
- la figure 6 est une vue d'ensemble du dispositif d'étanchéité gonflable de la figure 4, à l'état gonflé ;
- la figure 7 est une vue d'ensemble isométrique d'une deuxième variante de réalisation d'une cellule de stockage conforme à l'invention, dans laquelle est positionné un ensemble de produits sur palette et est mis en circulation un flux d'air arrière/avant traversant l'ensemble de produits sur palette, et dans laquelle le dispositif d'étanchéité gonflable spécifique de l'invention est réalisé conformément à une deuxième variante de réalisation et est dégonflé ;
- La figure 8 représente la cellule de la figure 7, une fois que le dispositif d'étanchéité gonflable spécifique de l'invention a été gonflé et qu'un flux d'air inverse avant/arrière est mis en circulation à travers l'ensemble de produits sur palette.

### Description détaillée

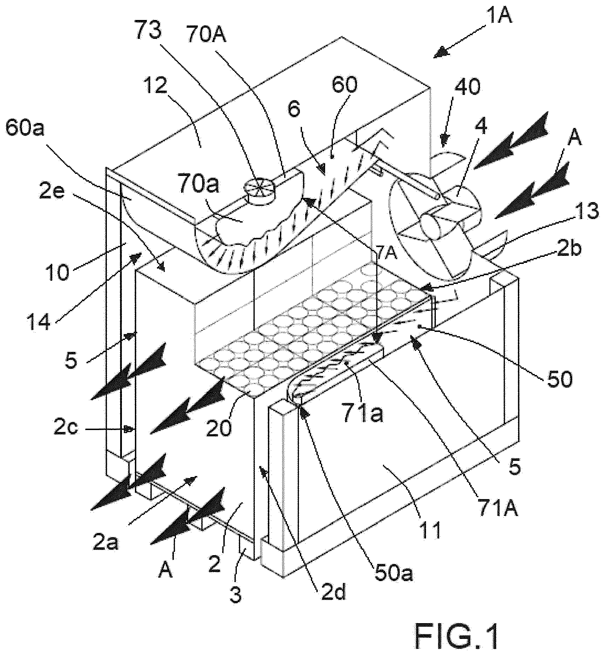

On a représenté sur la figure 1, une première variante de réalisation particulière d'une cellule de stockage 1A, qui est conforme à l'invention, et dans laquelle est positionné un ensemble 2 de produits 20 conditionnés dans des emballages et disposés sur un support 3 de type palette.

Cette cellule de stockage 1A peut être utilisée pour le stockage de tout type de produits 20, est plus particulièrement, mais pas exclusivement, de produits alimentaires (lactés ou non lactés) tels que par exemple yaourts fermentés, yaourts fermiers, yogourts, crèmes dessert, fromages, fruits, légumes, plats préparés, levure, compotes, jus de fruits, desserts lactés ou non lactés, beurre etc...

Cette cellule de stockage 1A peut également être utilisée pour stocker des produits 20 non alimentaires.

La cellule de stockage 1 peut être utilisée pour ajuster la température, et notamment refroidir les produits 20 et/ou réchauffer les produits 20 et/ou maintenir la température des produits 20, et/ou pour ajuster l'humidité des produits 20.

Cet ensemble 2 de produits 20 peut être manutentionné, par exemple au moyen d'un chariot à fourche, pour sa mise en place dans la cellule de stockage 1 ou pour son retrait de la cellule de stockage 1.

Dans le cadre de l'invention, l'ensemble 2 de produits 20 peut également être disposé sur au moins un support de stockage tel qu'un chariot ou rack, et n'est pas nécessairement un ensemble de produits supportés par une palette 3.

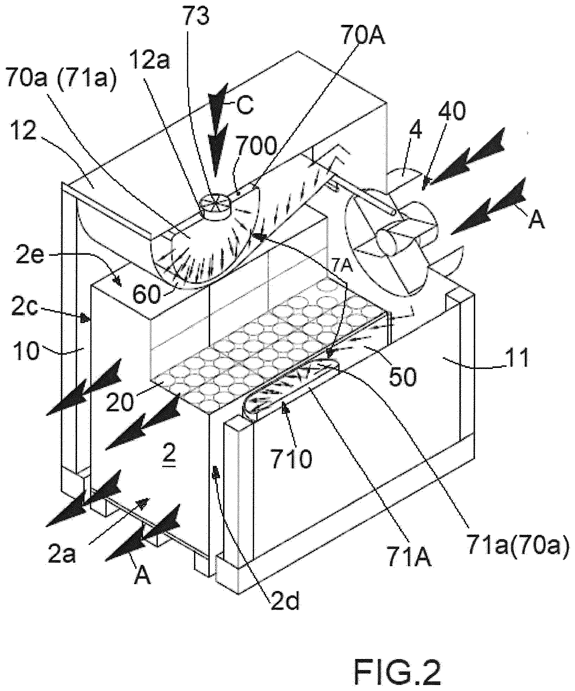

Sur cette figure 1, cet ensemble 2 de produits 20 est représenté de manière schématique et comporte une face avant 2a, une face arrière 2b, deux faces latérales opposées 2c, 2d et une face de dessus 2e, étant précisé qu'au moins les faces avant 2a et arrière 2b de cet ensemble 2 de produits 20 peuvent laisser passer un flux d'air A (figure 1) ou B (figure 2) circulant à travers l'ensemble 2 de produits 20.

Cette cellule de stockage 1 comporte deux parois latérales 10 et 11 en vis-à-vis et espacées l'une de l'autre et une paroi supérieure 12 reliant les deux parois latérales 10, 11 et délimitant avec les deux parois latérales 10, 11 un logement 14, et une paroi arrière 13. Ce logement 14 comporte en face avant une ouverture permettant notamment l'introduction de l'ensemble 2 de produits 20 dans la cellule de stockage et/ou le retrait de l'ensemble 2 de produits 20 de la cellule de stockage.

Sur la figure 1, la paroi latérale 11 et la paroi supérieure 12 sont coupées de manière à mieux visualiser l'intérieur de la cellule ; la partie supérieure de l'ensemble 2 de produits 20 en forme sensiblement de parallélépipède rectangle est également coupée de manière à visualiser les produits 20.

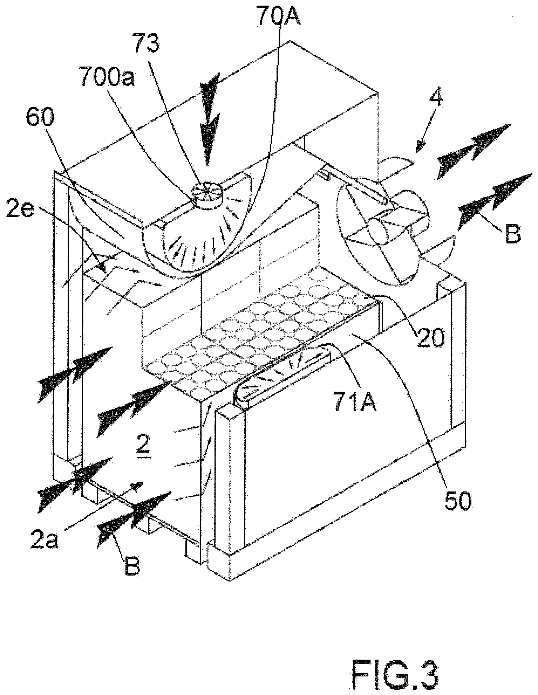

La cellule de stockage comporte en face arrière des moyens de ventilation 4, sous forme d'au moins un ventilateur 40, permettant en fonctionnement de créer un flux d'air arrière/avant A (figure 1) circulant de l'arrière vers l'avant du logement 14 ou de créer, de manière non concomitante au flux d'air arrière/avant A, un flux d'air avant /arrière B (figure 3) circulant de l'avant vers l'arrière du logement 14.

De préférence, les moyens de ventilation 4 comportent également des moyens (non représentés) permettant d'ajuster la température et/ou la teneur en humidité du flux d'air arrière/avant A et le cas échéant du flux d'air avant/arrière B.

Cette température et/ou le taux d'humidité du flux d'air arrière/avant A et le cas échéant du flux d'air avant/arrière B dépendront de la nature des produits 20 entreposés dans la cellule 1 et de l'action (notamment refroidissement ou chauffage ou maintien à température des produits 20) que l'on cherche à exercer sur ces produits 20 au moyen du flux d'air arrière/avant A et le cas échéant du flux d'air avant/arrière B.

La cellule de stockage 1A comporte trois dispositifs d'étanchéité principaux 5, 6, à savoir deux dispositifs d'étanchéité latéraux 5 (sur la figure 1 seul le dispositif d'étanchéité latéral 5 de droite est visible) et un dispositif d'étanchéité supérieur 6, les deux dispositifs d'étanchéité latéraux 5 étant identiques.

Ces trois dispositifs d'étanchéité principaux 5, 6 sont associés à un dispositif d'étanchéité gonflable 7A auxiliaire, qui est spécifique de l'invention.

### Dispositifs d'étanchéité 5 et 6 principaux

Les dispositifs d'étanchéité 5, 6 principaux sont connus et ont déjà été décrits notamment dans la demande de brevet internationale WO2019/174985, à laquelle on pourra se référer pour une description plus détaillée.

En particulier, chaque dispositif d'étanchéité principal 5, 6 comporte une jupe d'étanchéité 50, 60, qui est souple et imperméable à l'air.

Chaque jupe d'étanchéité souple 50, 60 est par exemple constituée par une bâche d'étanchéité monocouche ou multicouche imperméable à l'air ou par une toile enduite imperméable à l'air.

La jupe d'étanchéité latérale souple 50 de chaque dispositif d'étanchéité latéral 5 est solidaire de la paroi latérale 10 ou 11 correspondante, en étant plus particulièrement fixée au niveau de son bord avant 50a à la partie avant de la face interne de la paroi latérale 10 ou 11 correspondante, à proximité de l'ouverture en face avant du logement 14.

La jupe d'étanchéité supérieure souple 60 du dispositif d'étanchéité supérieur 6 est solidaire de la paroi supérieure 12, en étant plus particulièrement fixée au niveau de son bord avant 60a à la face interne de la paroi supérieure 12.

Chaque jupe d'étanchéité 50, 60 est apte (figure 1), sous l'effet d'une pression d'air généré dans la cellule par le flux d'air arrière/avant A, en présence d'un ensemble 2 de produits 20, à se gonfler par rapport à la face interne de la paroi correspondante 10, 11 ou 12 de la cellule et vers l'intérieur du logement 14.

### Dispositif d'étanchéité gonflable 7A auxiliaire

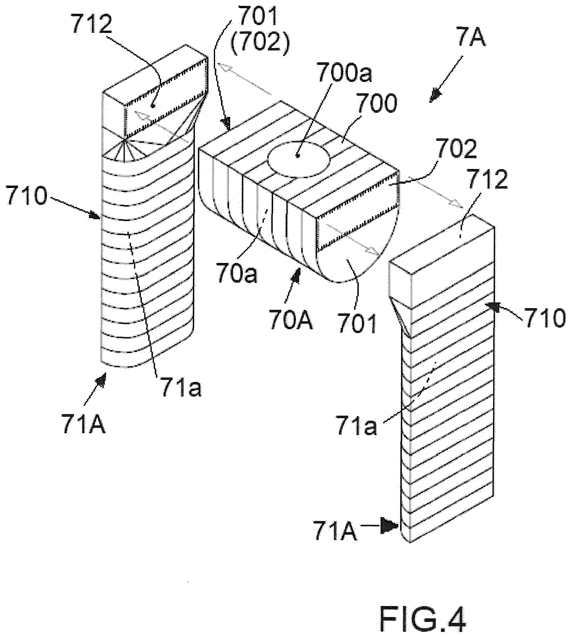

On a représenté sur les figures 4 à 6, une première variante de réalisation particulière de ce dispositif d'étanchéité gonflable 7A auxiliaire.

En référence à la figure 4, le dispositif d'étanchéité gonflable 7A comporte trois gaines d'étanchéité gonflables, et par exemple des gaines d'étanchéité en tout ou partie souples, de type gaine textile, à savoir une gaine d'étanchéité gonflable supérieure 70A et deux gaines d'étanchéité gonflables latérales 71A.

Le ou les matériaux imperméables utilisés pour fabriquer les gaines d'étanchéité gonflable 70A et 71A sont sans importance pour l'invention. L'invention n'est pas non plus limitée à la structure particulière des gaines d'étanchéité gonflable 70A et 71A des figures annexées, ni notamment aux géométries particulières des sections transversales des gaines d'étanchéité gonflables 70A et 71A des figures annexées.

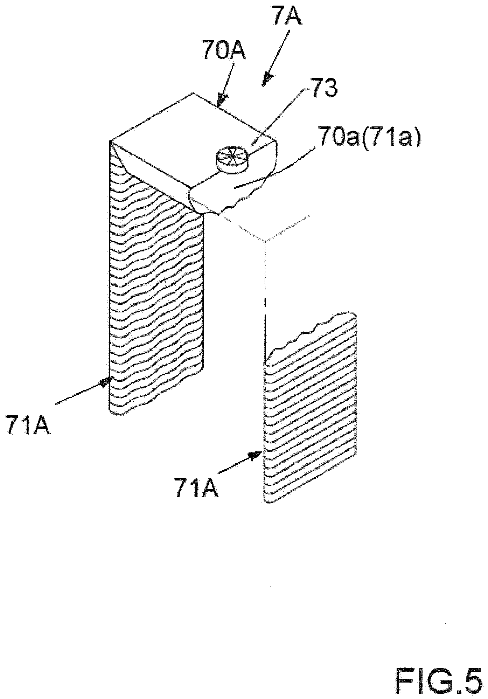

En référence à la figure 5, ces gaines d'étanchéité gonflables 70A, 71A peuvent être assemblées entre elle de manière amovible, en sorte de former une arche gonflable d'un seul tenant et en forme de U, la base du U étant formée par la gaine d'étanchéité gonflable supérieure 70A.

La gaine d'étanchéité gonflable supérieure 70A délimite un volume interne 70a pouvant être rempli d'air sous pression.

La paroi supérieure 700 de la gaine d'étanchéité supérieure 70A est utilisée pour fixer la gaine 70A à la face inférieure de la paroi supérieure 12 de la cellule de stockage 1A, et peut par conséquent être indifféremment plus ou moins souple ou plus ou moins rigide.

La paroi supérieure 700 de la gaine d'étanchéité supérieure 70A comporte une unique entrée d'air sous la forme d'un orifice traversant 700a (figure 4), à fonction d'ouverture d'admission d'air pour le gonflage de l'ensemble du dispositif d'étanchéité 7A et également à fonction d'ouverture d'évacuation d'air pour le dégonflage de l'ensemble du dispositif d'étanchéité 7A.

Cet orifice d'admission/évacuation d'air 700a est de préférence positionné au centre de la gaine d'étanchéité supérieure 70A, de manière à permettre lors du gonflage ou du dégonflage une distribution d'air symétrique vers les deux gaines d'étanchéité latérales 71A.

Dans une autre variante, l'entrée d'air formée par l'orifice d'admission/évacuation d'air 700a pourrait ne pas être centrée et/ou pourrait être réalisée dans l'une des deux gaines d'étanchéité latérales 71A.

Dans chaque paroi d'extrémité 701 souple de la gaine 70A est ménagée une ouverture de passage d'air 702.

Chaque gaine d'étanchéité gonflable latérale 71A délimite un volume interne 71a (figure 4) pouvant être rempli d'air sous pression.

La paroi 710 de la gaine d'étanchéité latérale 71A est utilisée pour fixer la gaine 71A à la face interne de l'une des parois latérale 10 ou 11 de la cellule, et peut par conséquent être indifféremment plus ou moins souple ou plus ou moins rigide.

Chaque gaine d'étanchéité latérale 71A comporte en partie supérieure une ouverture de passage d'air 712.

Lorsque la gaine supérieure 70A et les gaines latérales 71A sont assemblées (figure 5), chaque gaine d'étanchéité latérale gonflable 71A est positionnée à une extrémité de la gaine d'étanchéité supérieure 70A, de telle sorte que son ouverture de passage d'air 712 coïncide avec une ouverture de passage d'air 702 correspondante de la gaine d'étanchéité supérieure gonflable 70A. Chaque gaine d'étanchéité latérale gonflable 71a est en outre fixée de manière amovible à la gaine supérieure gonflable 70A, par exemple au moyen de systèmes de fermeture à glissières 72 (figure 4) ou équivalent.

Dans l'exemple particulier illustré, chaque système de fermeture à glissières 72 ou équivalent entoure les ouvertures de passage d'air 702/712 sur toute leur périphérie, de telle sorte que le volume interne 70a de la gaine supérieure 70A communique directement et de manière étanche, via les ouvertures de passage d'air 702/712, avec le volume interne 71a de chaque gaine d'étanchéité latérale gonflable 71A.

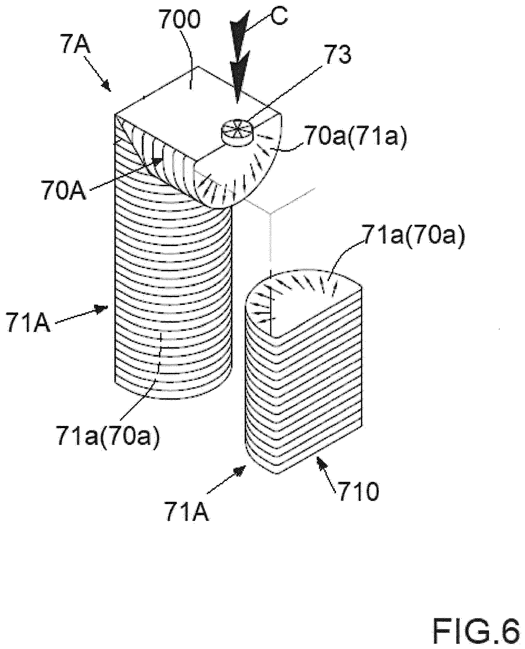

Il en résulte que l'élément d'étanchéité supérieur gonflable, constitué dans cet exemple particulier par la gaine supérieure gonflable 70A, et que chaque élément d'étanchéité latéral gonflable, constitué dans cet exemple particulier par la gaine latérale gonflable 71A, délimitent, indépendamment de la présence ou non d'un ensemble 2 de produits 20 dans la cellule, une unique chambre étanche gonflable, qui est constituée par lesdits volumes internes 70a et 71a de la gaine supérieure 70A et des gaines latérales 71A, et dans laquelle peut être insufflé de l'air sous pression (figure 6/flèche C), via l'orifice d'admission d'air 700a, afin de gonfler (figure 6) à la fois la gaine supérieure 70A et chaque gaine latérale 71A.

Dans la variante de réalisation illustrée sur la figure 4, chaque ouverture de passage d'air 702/712 est de forme rectangulaire, étant précisé toutefois que cette forme rectangulaire n'est pas limitative de l'invention, les ouvertures de passage d'air 702/712 pouvant avoir une géométrie différente.

En référence aux figures 5 et 6, pour son gonflage, le dispositif d'étanchéité 7A comporte un ventilateur 73, par exemple de type centrifuge, qui est distinct des moyens de ventilation 4 de la cellule, et qui d'une manière générale communique avec ladite unique chambre gonflable 70a/71a, en étant raccordé de manière étanche à l'ouverture d'admission d'air 700a, pour permettre le gonflage du dispositif d'étanchéité gonflable 7A.

Plus particulièrement dans l'exemple particulier des figures 5 et 6, ce ventilateur 73 est de préférence solidaire du dispositif d'étanchéité gonflable 7A en étant intégré à la gaine supérieure 70A au niveau de cette ouverture d'admission d'air 700a, de manière, en fonctionnement, à insuffler de l'air dans la chambre gonflable unique 70a/71a via cette ouverture d'admission d'air 700a, et directement en sortie du ventilateur 73.

Dans une autre variante de réalisation le ventilateur 73 pourrait être remplacé par un compresseur d'air.

Dans une autre variante de réalisation le ventilateur ou compresseur d'air 73 pourrait être déporté par rapport à l'ouverture d'admission d'air 700a et être raccordé de manière étanche à l'ouverture d'admission d'air 700a par une conduite souple ou rigide.

Dans une autre variante de réalisation, la chambre gonflable unique 70a/71a pourrait comporter plusieurs admissions d'air 700a, chacune raccordée de manière étanche au ventilateur ou compresseur d'air 73.

L'invention n'est pas limitée à un dispositif d'étanchéité gonflable dans lequel la gaine d'étanchéité supérieure 70A peut être assemblée de manière amovible avec chaque gaine d'étanchéité latérale 71A. Dans d'autres variantes de réalisation, la gaine d'étanchéité supérieure 70A peut être fixée de manière définitive avec chaque gaine d'étanchéité latérale 71A, par exemple au moyen d'une couture et/ou d'une soudure et/ou d'une ligne de collage entourant les ouvertures de passage d'air 702/712, l'important étant que la gaine d'étanchéité supérieure 70A communique de manière étanche avec chaque gaine d'étanchéité latérale 71A.

L'invention n'est pas non plus limitée à un dispositif d'étanchéité gonflable formé d'un assemblage monolithique de plusieurs pièces (gaines 70A et 71A), mais peut dans une autre variante être formé d'une seule pièce formant les gaines 70a et 71A.

En référence notamment aux figures 1 et 2, le dispositif d'étanchéité gonflable auxiliaire 7A qui vient d'être décrit est monté dans la cellule 1A :
- en fixant la gaine d'étanchéité supérieure gonflable 70A à la face interne de la paroi supérieure 12 de la cellule, entre cette paroi 12 et la bâche d'étanchéité supérieure 60, et
- en fixant chaque gaine d'étanchéité latérale gonflable 71A à la face interne de la paroi latérale correspondante 10 ou 11 de la cellule 1A, entre cette paroi latérale 10 ou 11 et la bâche d'étanchéité latérale 50 correspondante.

Plus particulièrement, le ventilateur 73 susvisé est positionné à travers la paroi supérieure 12 de la cellule, et permet d'aspirer de l'air à l'extérieur de la cellule de stockage 1A et de l'insuffler directement dans la chambre gonflable unique 70a/71a en faisant passer cet air (figure 2/ flèche C) à travers cette paroi supérieure 12 de la cellule.

### Exemples de fonctionnement de la cellule de stockage

La cellule de stockage 1 comporte des moyens électroniques de commande automatique, qui sont aptes à commander automatiquement les moyens de ventilation 4 et le ventilateur 73. Ces moyens électroniques de commande automatique de la cellule sont par exemple implémentés sous la forme d'un automate programmable qui est apte à exécuter automatiquement un programme stocké en mémoire.

Des phases particulières de fonctionnement pouvant être pilotées automatiquement par ces moyens électroniques de commande automatique de la cellule vont à présent être détaillées.

Dans la phase de fonctionnement particulière de la figure 1, les moyens électroniques de commande de la cellule commandent automatiquement le ventilateur 40 des moyens de ventilation 4, de telle sorte qu'un flux d'air arrière/avant A est mis en circulation dans la cellule de l'arrière vers l'avant de la cellule.

De manière connue en soi, en présence d'un ensemble 2 de produits 20 dans la cellule, la pression d'air qui est engendrée par ce flux arrière/avant A à l'intérieur la cellule de stockage entre chaque jupe 50, 60 et la paroi 10, 11 ou 12 correspondante permet le gonflement dans leur configuration d'étanchéité des jupes d'étanchéité 50, 60 par rapport à leur paroi respective 10, 11 et 12, de telle sorte que en référence à la figure 1 :
- la jupe d'étanchéité supérieure 60 se gonfle vers l'intérieur de la cellule en se plaquant en partie contre une partie de la face supérieure 2e de l'ensemble 2 de produits 20, qui couvre de préférence toute la largeur de l'ensemble 2 de produits 20, de manière à assurer une étanchéité entre la paroi supérieure 12 et la face supérieure 2e de l'ensemble 2 de produits 20.
- chaque jupe latérale 50 se gonfle vers l'intérieur de la cellule en se plaquant, de préférence sur toute la hauteur de l'ensemble 2 de produit 20, contre la face latérale correspondante 2c ou 2d de l'ensemble 2 de produits 20, de manière à assurer une étanchéité entre chaque paroi latérale 10,11 et la face latérale 2c, 2d correspondante de l'ensemble 2 de produits 20.

On réalise ainsi une étanchéité sur les trois cotés (face supérieure 2e et faces latérales 2c et 2d) de l'ensemble 2 de produits 20, de telle sorte que le flux d'air arrière/avant A entrant dans la cellule est canalisé de manière à circuler de l'arrière vers l'avant en étant forcé à passer à travers les produits 20 de l'ensemble 2.

Au cours de cette phase de fonctionnement de la figure 1, le ventilateur 73 du dispositif d'étanchéité gonflable 7A est à l'arrêt et la gaine supérieure 70A et les gaines latérales 71A de ce dispositif d'étanchéité gonflable 7A sont dégonflées.

Dans la phase de fonctionnement particulière de la figure 2, les moyens électroniques de commande de la cellule commandent automatiquement le ventilateur 40 des moyens de ventilation 4, de telle sorte qu'un flux d'air arrière/avant A est mis en circulation dans la cellule de l'arrière vers l'avant de la cellule, comme pour la phase de fonctionnent de la figure 1, et commandent en outre automatiquement le ventilateur 73 de manière à aspirer de l'air (flèche B) à l'extérieur de la cellule et à l'insuffler dans le dispositif d'étanchéité auxiliaire 7A par l'ouverture d'admission d'air 700a, ce qui permet de gonfler la gaine supérieure 70A et les gaines latérales 71A de ce dispositif d'étanchéité auxiliaire 7A.

En référence à cette figure 2, lorsque le dispositif d'étanchéité auxiliaire 7A est gonflé :
- à l'état gonflé, la gaine d'étanchéité supérieure 70A, exerce une pression mécanique sur une partie avant de la jupe d'étanchéité supérieure 60, cette pression mécanique étant orientée vers l'intérieur de la cellule et dans une direction opposée à la paroi supérieure 12 de la cellule (vers le bas) ; cette pression mécanique permet d'écarter la jupe d'étanchéité supérieure 60 par rapport à ladite paroi supérieure 12 et de maintenir ladite partie avant de la jupe d'étanchéité 60 appliquée contre la face supérieure 2e de l'ensemble 2 de produits 20, de manière à assurer une étanchéité sur le dessus de l'ensemble 2 de produits 20, y compris en l'absence le cas échéant de flux d'air arrière/avant A.
- chaque gaine d'étanchéité latérale 71A, à l'état gonflé, exerce sur une partie avant de la jupe d'étanchéité latérale 50 correspondante une pression mécanique orientée vers l'intérieur de la cellule et dans une direction opposée à ladite paroi latérale 10 ou 11 de la cellule par rapport à laquelle la jupe d'étanchéité latérale 50 est apte à se gonfler ; cette pression mécanique permet d'écarter la jupe d'étanchéité latérale 50 par rapport à ladite paroi 10 ou 11 de la cellule et ainsi de maintenir ladite partie avant de la jupe d'étanchéité 50 appliquée contre la face latérale 2c ou 2d de l'ensemble 2 de produits 20. On maintient ainsi une étanchéité sur chaque côté de l'ensemble 2 de produits 20, y compris en l'absence le cas échéant de flux d'air arrière/avant A.

En outre en référence à la figure 6, lorsque le dispositif d'étanchéité 7A est gonflé, la gaine d'étanchéité supérieure 70A et chaque gaine d'étanchéité latérale 71A forment un angle étanche à leur jonction et permettent ainsi avantageusement d'assurer une étanchéité dans le coin supérieur de la cellule 1A à la jonction entre la paroi supérieure 12 et la paroi latérale 10 ou 11. On évite ainsi avantageusement des fuites d'air également entre chaque coin supérieur de la cellule 1A et l'ensemble 2 de produits 20.

Dans une autre variante de fonctionnement optionnelle, lorsqu'un flux d'air arrière/avant A est mis en circulation de l'arrière vers l'avant de la cellule, l'une ou l'autre des jupes d'étanchéité 50, 60, et notamment la jupe d'étanchéité supérieure 60, peut se gonfler et venir en contact avec l'ensemble 2 de produits 20, sous l'action non seulement de ce flux d'air arrière/avant A, mais de surcroît avec l'assistance de l'élément d'étanchéité gonflable correspondant du dispositif d'étanchéité gonflable 7A (c'est-à-dire dans l'exemple susvisé avec l'assistance de la gaine d'étanchéité latérale 71A pour l'une ou l'autre des jupes d'étanchéité latérale 50 ou avec l'assistance de la gaine d'étanchéité supérieure 70A pour la jupe d'étanchéité supérieure 60), lorsque le ventilateur 73 est mis en fonctionnement et que le dispositif d'étanchéité 7A se gonfle ou est gonflé.

A l'issue de l'une ou l'autre des phases de fonctionnement susvisées, les produits 20 dans la partie avant de l'ensemble 2, qui sont situés entre l'ouverture de chargement de la cellule et les zones de contact des jupes d'étanchéité 50 et 60 avec l'ensemble 2 de produits 20, peuvent néanmoins présenter un défaut d'homogénéité en température et/ou en humidité par rapport aux autres produits 20 de l'ensemble 2.

Pour pallier ce problème, dans une autre phase de fonctionnement illustrée sur la figure 3, les moyens électroniques de commande automatique de la cellule commandent automatiquement les moyens de ventilation 4, de manière à arrêter le flux d'air arrière/avant A et à créer un flux d'air inverse B, qui circule à travers ensemble 2 de produits 20 de l'avant vers l'arrière de la cellule et dont la température et/ou l'humidité sont de préférence ajustées comme pour le flux d'air arrière/avant A.

Cette inversion du sens de circulation du flux d'air dégonfle la jupe d'étanchéité supérieure 60 et les jupes d'étanchéité latérales 50, lesquelles jupes 50, 60 sont toutefois avantageusement maintenues au contact de l'ensemble 2 de produits 20 par les gaines 70A et 71A gonflées du dispositif d'étanchéité gonflable auxiliaire 7A

A l'entrée de la cellule 1, ce flux d'air inverse B est canalisé de manière à passer à travers au moins tous les produits 20 dans la partie avant de l'ensemble 2, qui sont situés entre l'ouverture de chargement de la cellule et les zones de contact des jupes d'étanchéité 50 et 60 avec l'ensemble 2 de produits 20.

Le cas échéant ce flux d'air inverse B peut permettre d'améliorer l'homogénéité de la température et/ou de l'humidité des produits 20 de l'ensemble 2, et peut permettre une réduction de la durée des cycles de fonctionnement de la cellule.

Dans une autre variante de réalisation, le dispositif d'étanchéité auxiliaire 7A peut être gonflé uniquement au cours de la phase de fonctionnement pendant laquelle un flux d'air avant/arrière B, ne permettant pas de gonfler les jupes d'étanchéité latérales 50 et supérieure 60, est créé dans la cellule de stockage.

Avant de décharger la cellule de stockage en retirant l'ensemble 2 de produits 20 et afin de à faciliter le déchargement des produits 20, on arrête le ventilateur 40 et on arrête le ventilateur 73, ce qui permet de dégonfler le dispositif d'étanchéité gonflable 7A par échappement libre de l'air contenu dans la chambre unique 70a/71a de ce dispositif d'étanchéité gonflable 7A, via l'ouverture 700a et à travers le ventilateur 73 à l'arrêt.

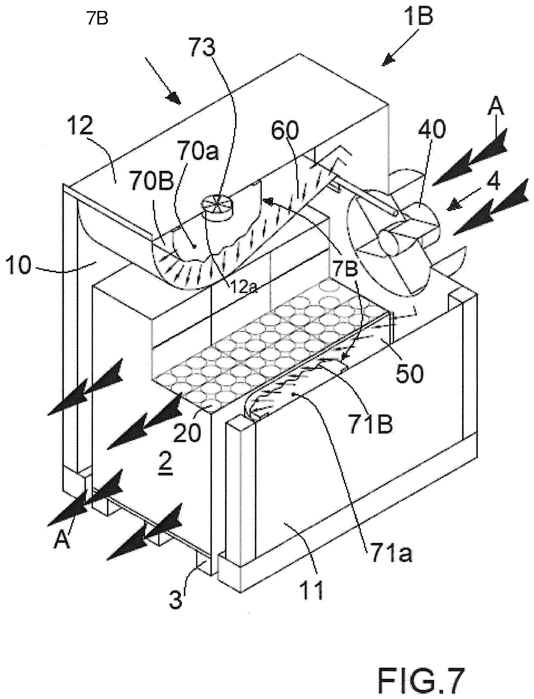

On a représenté sur les figures 7 et 8, une autre variante de réalisation particulière d'une cellule de stockage 1B, qui est conforme à l'invention, et dans laquelle est positionné un ensemble 2 de produits 20 conditionnés dans des emballages et disposés sur un support 3 de type palette.

Cette cellule de stockage 1B se différencie de celle 1A précédemment décrite, par la mise en oeuvre d'un dispositif d'étanchéité gonflable 7B ayant une structure différente de la structure du dispositif d'étanchéité gonflable 7A précédemment décrit.

En particulier, ce dispositif d'étanchéité gonflable 7B comporte un élément d'étanchéité supérieur gonflable 70B et deux éléments d'étanchéité latéraux gonflables 71B (seul celui de droite est visible sur les figures 7 et 8).

L'élément d'étanchéité supérieur gonflable 70B est réalisé par exemple sous la forme d'une bande de matériau souple et imperméable, qui est fixée à la paroi supérieure 12 de la cellule, et qui délimite un volume interne 70a avec cette paroi supérieure 12.

Chaque élément d'étanchéité latéral gonflable 71B est réalisé par exemple sous la forme d'une bande de matériau souple et imperméable, qui est fixée à la paroi latérale 10 ou 11 de la cellule, et qui délimite un volume interne 71a avec cette paroi latérale 10 ou 11.

A chaque extrémité, l'élément d'étanchéité supérieur gonflable 71A est raccordé à chaque élément d'étanchéité latéral gonflable 71B, de manière amovible ou de manière définitive, de telle sorte que le volume interne 70a communique de manière étanche avec chaque volume interne 71a, lesdits éléments d'étanchéité gonflables 71A et 71B délimitant ainsi, avec lesdites parois 10, 11, et 12 de la cellule, une chambre gonflable unique 70a/71a étanche, indépendamment de la présence ou non d'un ensemble de produits 20 dans la cellule.

Dans l'exemple particulier illustré sur les figures, le ventilateur 73 est fixé à la paroi supérieure 12 de la cellule, en étant positionné à travers une ouverte traversante 12a (Fig. 2), qui est réalisée dans cette paroi 12, et qui débouche dans le volume interne 70a.

Le ventilateur 73 permet, en fonctionnement, d'aspirer de l'air à l'extérieur de la cellule et d'insuffler cet air (figure 8/ Flèche C) dans la chambre gonflable unique 70a/71a, via cette ouverture traversante 12a, et directement en sortie du ventilateur 73, ce qui permet le gonflage (figure 8) de l'élément d'étanchéité supérieur gonflable 70B par rapport à la paroi 12 et de chaque élément d'étanchéité latéral gonflable 71B par rapport respectivement aux parois 10 et 11.

Les mêmes phases de fonctionnement que celles précédemment décrites pour la cellule de stockage 1A peuvent être mises en oeuvre avec la cellule de stockage 1B.

L'invention n'est pas limitée aux exemples particuliers réalisation et de mise en oeuvre d'une cellule de stockage qui ont été précédemment décrits en référence aux figures annexées et d'autres variantes de réalisation peuvent également être envisagées dans le cadre de l'invention.

Ainsi de manière non exhaustive, dans d'autres variantes de réalisation :
- le dispositif d'étanchéité gonflable 7A pourrait comporter un élément d'étanchéité supérieur gonflable 70A ou 70B et un seul élément d'étanchéité latéral 71A ou 71B ; dans ce cas l'extrémité de l'élément d'étanchéité supérieur gonflable 70A ou 70B qui n'est pas prolongée par un élément d'étanchéité latéral 71A ou 71B est totalement fermée de manière étanche ;
- les moyens de ventilation 4 peuvent être conçus ou être utilisés de manière à créer uniquement un flux d'air (arrière/avant A) permettant le gonflage des bâches d'étanchéité 50, 60 ou équivalent (c'est-à-dire pas de mise en oeuvre d'un flux d'air inverse B) ou de manière à créer uniquement un flux d'air (avant/arrière B) (c'est- à-dire pas de mise en oeuvre d'un flux d'air arrière/avant A).

Dans la variante de réalisation des figures annexées, le dispositif d'étanchéité 7A (respectivement 7B) gonflable est associé aux jupes d'étanchéité 50 et 60 des dispositifs d'étanchéité 5 et 6 et permet, lorsqu'il est gonflé d'assurer une étanchéité indirecte par l'intermédiaire de ces jupes d'étanchéités 50 et 60 interposées entre les éléments d'étanchéité gonflables 70A (respectivement 70B) et 71A (respectivement 71B) et l'ensemble 2 de produits 20. Dans une autre variante, un élément interposé entre un élément d'étanchéité gonflable 70A, 70B, 71A, 71B et l'ensemble 2 de produits 20 n'est pas nécessairement gonflable, et plus particulièrement n'est pas nécessairement une jupe d'étanchéité gonflable 50 ou 60. Dans une autre variante, les jupes d'étanchéité 50 et 60 pourraient être supprimées ; dans ce cas, à l'état gonflé, l'élément d'étanchéité supérieur 70A (respectivement 70B) et le ou les éléments d'étanchéité latéraux 71A (respectivement 71B) du dispositif d'étanchéité gonflable 7A (respectivement 7B) permettent de réaliser une étanchéité directe, en venant directement en contact avec l'ensemble 2 de produits 20.

Dans la variante de réalisation des figures annexées, l'air pour le gonflage du dispositif d'étanchéité 7A ou 7B est de manière avantageuse obtenu au moyen d'une source d'air (ventilateur 73 ou compresseur d'air) qui est indépendante des moyens de ventilation 4. Néanmoins, dans une autre variante de réalisation, cet air pour le gonflage du dispositif d'étanchéité 7 peut également être obtenu en recyclant ou en dérivant une partie du flux d'air inverse B produit par les moyens de ventilation 4 au moyen d'au moins une conduite raccordant la chambre de gonflage aux moyens de ventilation 4.

## Revendications

1. Cellule (1A ; 1B) de stockage d'un ensemble (2) de produits (20), et notamment d'un ensemble de produits disposés sur au moins un support de stockage (3), et plus particulièrement sur au moins un support de stockage de type palette, chariot ou rack, ladite cellule comportant deux parois latérales (10 ; 11) en vis-à-vis et espacées l'une de l'autre et une paroi supérieure (12) délimitant, avec les deux parois latérales, un logement (14) pour l'ensemble (2) de produits (20), ledit logement (14) comportant en face avant une ouverture pour l'introduction et/ou le retrait de l'ensemble de produits, ladite cellule comportant des moyens de ventilation (4), qui sont aptes à créer un flux d'air arrière/avant (A) circulant dans le logement (14) de l'arrière vers l'avant du logement ou qui sont aptes à créer un flux d'air avant/arrière (B) circulant dans le logement (14) de l'avant vers l'arrière du logement, et ladite cellule comportant un dispositif d'étanchéité gonflable (7A ; 7B) et des moyens de gonflage qui permettent de gonfler le dispositif d'étanchéité gonflable, le dispositif d'étanchéité gonflable (7A ; 7B) comportant un élément d'étanchéité supérieur gonflable (70A ; 70B) et au moins un élément d'étanchéité latéral gonflable (71A; 71B), qui permettent, à l'état gonflé, d'assurer directement ou indirectement une étanchéité entre la paroi supérieure (12) de la cellule et au moins une partie de la face de dessus (2e) d'un ensemble (2) de produits (20) positionnés dans la cellule et une étanchéité entre au moins une paroi latérale (10 ou 11) de la cellule et au moins une partie de l'une des faces latérales (2c ou 2d) d'un ensemble (2) de produits (20) positionnés dans la cellule, **caractérisée en ce que** l'élément d'étanchéité supérieur gonflable (70A ; 70B) et l'élément d'étanchéité latéral gonflable (71A; 71B) délimitent une unique chambre gonflable (70a/71a), y compris en l'absence d'un ensemble (2) de produits (20) dans la cellule de stockage, et **en ce que** les moyens de gonflage permettent de gonfler l'élément d'étanchéité supérieur gonflable (70A ; 70B) et l'élément d'étanchéité latéral gonflable (71A ;71B), y compris en l'absence d'un ensemble (2) de produits (20) dans la cellule de stockage, en insufflant de l'air dans cette chambre gonflable unique (70a/71a).

2. Cellule selon la revendication 1, dans laquelle le dispositif d'étanchéité gonflable (7A ; 7B) comporte deux éléments d'étanchéité latéraux gonflables (71A), qui délimitent, avec l'élément d'étanchéité supérieur gonflable (70A), ladite chambre gonflable (70a/71a), et qui permettent, à l'état gonflé, d'assurer directement ou indirectement une étanchéité respectivement entre chaque paroi latérale (10 ou 11) de la cellule et au moins une partie de chaque face latérale (2c ou 2d) d'un ensemble (2) de produits (20) positionnés dans la cellule.

3. Cellule selon l'une quelconque des revendications précédentes, dans laquelle la chambre gonflable (70a/71a) comporte au moins une entrée d'air (700a), de préférence une entrée d'air (700a) unique, de sorte que l'air insufflé par cette entrée d'air (700a) permet le gonflage de l'élément d'étanchéité supérieur gonflable (70A) et du ou des éléments d'étanchéité latéraux gonflables (71A).

4. Cellule selon la revendication 3, dans laquelle cette entrée d'air (700a) est réalisée dans l'élément d'étanchéité supérieur gonflable (70A ; 70B) ou dans un élément d'étanchéité latéral gonflable (71A ; 71B), et de préférence est positionnée sensiblement de manière centrale par rapport à l'élément d'étanchéité supérieur gonflable (70A ; 70B).

5. Cellule selon l'une quelconque des revendications précédentes, dans laquelle les moyens de gonflage comportent au moins un ventilateur (73) ou un compresseur d'air et ladite chambre gonflable (70a/71a) comporte au moins une entrée d'air (700a), et de préférence une entrée d'air (700a) unique, qui est raccordée au ventilateur (73) ou au compresseur d'air, de sorte que l'air insufflé dans ladite chambre gonflable (70a/71a) à travers cette entrée d'air (700a), au moyen du ventilateur (73) ou du compresseur d'air, permet le gonflage de l'élément d'étanchéité supérieur gonflable (70A) et du ou des éléments d'étanchéité latéraux gonflables (71A).

6. Cellule selon la revendication 5, dans laquelle le ventilateur (73) ou compresseur d'air des moyens de gonflage est distinct des moyens de ventilation (4) de la cellule.

7. Cellule selon l'une quelconque des revendications 5 ou 6, dans laquelle ledit ventilateur (73) ou ledit compresseur d'air permet d'aspirer de l'air à l'extérieur de la cellule de stockage (1) et de l'insuffler dans la chambre gonflable (70a/71a) en faisant passer cet air à travers l'une des parois (10, 11, 12) de la cellule, et de préférence à travers la paroi supérieure (12) de la cellule, et de préférence dans laquelle ledit ventilateur (73) ou ledit compresseur d'air est positionné à travers l'une des parois (10, 11, 12) de la cellule et de préférence à travers la paroi supérieure (12) de la cellule, et permet d'insuffler de l'air directement dans la chambre gonflable (70a/71a).

8. Cellule selon l'une quelconque des revendications 5 à 7, dans laquelle ledit ventilateur (73) ou compresseur d'air est intégré à l'élément d'étanchéité supérieur gonflable (70A ; 70B) ou à un élément d'étanchéité latéral gonflable (71A ; 71B) du dispositif d'étanchéité gonflable (7A ; 7B), et de préférence est intégré à l'élément d'étanchéité supérieur gonflable (70A ; 70B).

9. Cellule selon l'une quelconque des revendications précédentes, dans laquelle l'élément d'étanchéité supérieur gonflable (70A ; 70B) et chaque élément d'étanchéité latéral gonflable (71A ; 71B) sont des pièces distinctes, qui sont assemblées ou aptes à être assemblées l'une avec à l'autre, de manière amovible ou de manière définitive, ou dans laquelle ledit dispositif d'étanchéité gonflable (7A/7B) est formé d'une seule pièce.

10. Cellule selon l'une quelconque des revendications précédentes, dans laquelle ledit dispositif d'étanchéité gonflable (7A) est constitué par une ou plusieurs gaines d'étanchéité gonflables, en particulier par une ou plusieurs gaines d'étanchéité souples, et plus particulièrement encore par une ou plusieurs gaines textiles, et de préférence dans laquelle l'élément d'étanchéité supérieur gonflable comporte une gaine supérieure gonflable (70A), qui est fixée à la paroi supérieure (12) de la cellule, et chaque élément d'étanchéité latéral gonflable comporte une gaine latérale gonflable (71A), qui est fixée à l'une des parois latérales (10, 12) de la cellule et qui communique directement et de manière étanche avec la gaine supérieure gonflable (70A), en sorte de former ladite chambre gonflable (70a/71a.

11. Cellule selon l'une quelconque des revendications 1 à 10, dans laquelle l'élément d'étanchéité supérieur gonflable (70B) est fixé à la paroi supérieure (12) de la cellule et chaque élément d'étanchéité latéral gonflable (71B) est fixé à l'une des parois latérales (10 ou 11) de la cellule, de telle sorte que lesdits éléments d'étanchéité gonflables (70B ; 71B) délimitent, avec lesdites parois de la cellule, ladite chambre gonflable (70a / 71a).

12. Cellule selon l'une quelconque des revendications précédentes, comportant une jupe d'étanchéité souple supérieure (60), qui est fixée à la paroi supérieure (12) de la cellule, de telle sorte que l'élément d'étanchéité gonflable supérieur (70A : 70B) du dispositif d'étanchéité gonflable (7A ; 7B) est positionné entre cette paroi supérieure (12) et cette jupe d'étanchéité souple supérieure (60), et ladite jupe d'étanchéité souple supérieure (60) étant apte à se gonfler par rapport à la paroi supérieure (12) de la cellule et vers l'intérieur du logement (14) sous l'effet d'une pression d'air qui est générée dans le logement (14), en présence d'un ensemble (2) de produits (20) dans la cellule de stockage, par ledit flux d'air (A) créé par les moyens de ventilation (4) de la cellule, et éventuellement avec l'assistance de l'élément d'étanchéité gonflable supérieur (70A : 70B) en cours de gonflement ou à l'état gonflé, et/ou comportant au moins une jupe d'étanchéité souple latérale (50), qui est fixée à l'une (10 ou 11) des parois latérales de la cellule gonflable, de telle sorte qu'un élément d'étanchéité gonflable latéral (71A ; 71B) du dispositif d'étanchéité gonflable (7A ; 7B) est positionné entre cette paroi latérale (10 ou 11) et la jupe d'étanchéité souple latérale (50), et ladite jupe d'étanchéité souple latérale (50) est apte à se gonfler par rapport à ladite paroi latérale (10 ou 11) de la cellule et vers l'intérieur du logement (14) sous l'effet d'une pression d'air qui est générée dans le logement (14), en présence d'un ensemble (2) de produits (20) dans la cellule de stockage, par ledit flux d'air (A) créé par les moyens de ventilation (4) de la cellule et éventuellement avec l'assistance de l'élément d'étanchéité gonflable latéral (71A : 71B) en cours de gonflement ou à l'état gonflé.

13. Cellule de stockage selon la revendication 12, comportant des moyens de commande qui sont aptes à commander automatiquement les moyens de ventilation (4) et les moyens de gonflage (73) du dispositif d'étanchéité gonflable (7A ; 7B), de telle sorte que pendant au moins une phase de fonctionnement de la cellule de stockage, les moyens de ventilation (4) génèrent dans le logement (14) un flux d'air (A) qui permet, en présence d'un ensemble (2) de produits (20) dans la cellule de stockage, de gonfler chaque jupe d'étanchéité souple (60 et/ou 50), le dispositif d'étanchéité gonflable (7A ; 7B) pouvant éventuellement, mais pas nécessairement, être gonflé pendant cette phase de fonctionnement.

14. Cellule de stockage selon la revendication 12 ou 13, comportant des moyens de commande qui sont aptes à commander automatiquement les moyens de ventilation (4) et les moyens de gonflage (73) du dispositif d'étanchéité (7A ; 7B) gonflable, de telle sorte que pendant au moins une phase de fonctionnement de la cellule le dispositif d'étanchéité gonflable (7A ; 7B) est gonflé et les moyens de ventilation (4) génèrent dans le logement (14) un flux d'air (B) qui ne permet pas de gonfler la ou les jupes d'étanchéité souples (60 et/ou 50).

15. Cellule de stockage selon l'une quelconque des revendications précédentes, dans laquelle les moyens de ventilation (4) sont aptes à créer, de manière non concomitante et de préférence l'un après l'autre, un flux d'air arrière/avant (A) circulant de l'arrière vers l'avant du logement (14) et un flux d'air avant/arrière (B) circulant de l'avant vers l'arrière du logement (14) ou vice et versa.

16. Utilisation de la cellule de stockage (1) de l'une quelconque des revendications précédentes, pour ajuster la température et/ou l'humidité d'au moins un ensemble (2) de produits (20), et notamment d'un ensemble de produits disposés sur au moins un support de stockage (3), et plus particulièrement sur au moins un support de stockage de type palette, chariot ou rack, et de préférence les produits (20) étant des produits non alimentaires ou des produits alimentaires, et plus particulièrement des produits alimentaires choisis parmi ceux de la liste suivante : produits alimentaires lactés, produits alimentaires non lactés, yaourts fermentés, yaourts fermiers, yogourts, crèmes dessert, fromages, fruits, légumes, plats préparés, levure, compotes, jus de fruits, desserts lactés ou non lactés, beurre .

17. Procédé de stockage, et plus particulièrement d'ajustement de la température et/ou de l'humidité d'au moins un ensemble (2) de produits (20), et notamment d'un ensemble de produits disposés sur au moins un support de stockage (3), et plus particulièrement sur au moins un support de stockage de type palette, chariot ou rack, au cours duquel on positionne ledit ensemble (2) de produits (20) dans le logement (14) de la cellule de stockage (1) de l'une quelconque des revendications 1 à 15, puis on gonfle le dispositif d'étanchéité gonflable (7A ; 7B) de manière à réaliser directement ou indirectement une étanchéité entre la paroi supérieure (12) de la cellule et au moins une partie de la face de dessus (2e) de l'ensemble (2) de produits (20) positionnés dans la cellule et une étanchéité entre au moins l'une des parois latérales (2c ou 2d) de la cellule et au moins une partie de l'une des faces latérales (2c ou 2d) de l'ensemble (2) de produits (20) positionnés dans la cellule, et de préférence entre les deux parois latérales (2c ou 2d) de la cellule et moins une partie des deux faces latérales opposées (2c ; 2d) de l'ensemble (2) de produits (20), et on crée un flux d'air arrière/avant (A) circulant à travers l'ensemble (2) de produits (20) de l'arrière vers l'avant de la cellule de stockage (1) ou un flux d'air avant/arrière (B) circulant à travers l'ensemble (2) de produits (20) de l'avant vers l'arrière de la cellule de stockage (1).

## Patentansprüche

1. Zelle (1A; 1B) zur Lagerung eines Satzes (2) von Produkten (20), insbesondere einer Gesamtheit von Produkten, die auf mindestens einem Lagerträger (3), und insbesondere auf mindestens einem Lagerträger vom Typ Palette, Wagen oder Gestell, wobei die Zelle zwei einander zugewandte und voneinander beabstandete Seitenwände (10; 11) und eine obere Wand (12) umfasst, die mit den beiden Seitenwänden eine Gehäuse (14) für den Satz (2) von Produkten (20) definiert, wobei das Gehäuse (14) an der Vorderseite eine Öffnung zum Einführen und/oder Entnehmen des Satzes von Produkten aufweist, wobei die Zelle Belüftungsmittel (4) aufweist, die geeignet sind, einen in dem Gehäuse (14) von der Rückseite zu der Vorderseite des Gehäuses fließenden Rückwärts-/Vorwärtsluftstrom (A) oder einen in dem Gehäuse (14) von der Vorderseite zu der Rückseite des Gehäuses fließenden Vorwärts-/Rückwärtsluftstrom (B) zu erzeugen, und wobei die Zelle eine aufblasbare Dichtungsvorrichtung (7A; 7B) und eine das Aufblasen der aufblasbaren Dichtungsvorrichtung ermöglichende Aufblaseinrichtung aufweist, wobei die aufblasbare Dichtungsvorrichtung (7A; 7B) ein aufblasbares oberes Dichtungselement (70A; 70B) und mindestens ein aufblasbares seitliches Dichtungselement (71A; 71B) aufweist, die im aufgeblasenen Zustand direkt oder indirekt eine Abdichtung zwischen der oberen Wand (12) der Zelle und mindestens einem Teil der Oberseite (2e) eines Satzes (2) von Produkten (20), die in der Zelle positioniert sind, und eine Abdichtung zwischen mindestens einer Seitenwand (10 oder 11) der Zelle und mindestens einem Teil einer der Seitenflächen (2c oder 2d) eines Satzes (2) von Produkten (20), die in der Zelle positioniert sind, ermöglichen, **dadurch gekennzeichnet, dass** das obere aufblasbare Dichtungselement (70A; 70B) und das seitliche aufblasbare Dichtungselement (71A; 71B) eine einzelne aufblasbare Kammer (70a/71a) auch bei Abwesenheit eines Satzes (2) von Produkten (20) in der Lagerzelle begrenzen, und dass die Aufblasmittel das Aufblasen des aufblasbaren oberen Dichtungselements (70A; 70B) und des aufblasbaren seitlichen Dichtungselements (71A; 71B) auch bei Abwesenheit eines Satzes (2) von Produkten (20) in der Lagerzelle das Einblasen von Luft in diese einzelne aufblasbare Kammer (70a/71a) ermöglicht.

2. Zelle nach Anspruch 1, wobei die aufblasbare Dichtungsvorrichtung (7A; 7B) zwei aufblasbare seitliche Dichtungselemente (71A) aufweist, die zusammen mit der aufblasbaren obere Dichtung (70A) die aufblasbare Kammer (70a/71a) begrenzen, und die es im aufgeblasenen Zustand ermöglichen, direkt oder indirekt eine Dichtung jeweils zwischen jeder Seitenwand (10 oder 11) der Zelle und mindestens einem Teil jeder Seitenfläche (2c oder 2d) des Satzes (2) von Produkten (20), die in der Zelle positioniert sind, zu ermöglichen.

3. Zelle nach einem der vorhergehenden Ansprüche, wobei die aufblasbare Kammer (70a/71a) mindestens einen Lufteinlass (700a), vorzugsweise einen einzelnen Lufteinlass (700a), aufweist, so dass die von diesem Lufteinlass (700a) eingeblasene Luft das Aufblasen des aufblasbaren oberen Dichtungselements (70A) und des aufblasbaren seitlichen Dichtungselements bzw. der aufblasbaren seitlichen Dichtungselemente (71A) ermöglicht.

4. Zelle nach Anspruch 3, wobei der Lufteinlass (700a) in dem oberen aufblasbaren Dichtungselement (70A; 70B) oder in einem seitlichen aufblasbaren Dichtungselement (71A; 71B) ausgebildet ist, und vorzugsweise im Wesentlichen zentral in Bezug auf das obere aufblasbare Dichtungselement (70A; 70B) positioniert ist.

5. Zelle nach einem der vorhergehenden Ansprüche, wobei die Aufblasmittel mindestens ein Gebläse (73) oder einen Luftkompressor umfassen und die aufblasbare Kammer (70a/71a) mindestens einen Lufteinlass (700a) und vorzugsweise einen einzelnen Lufteinlass (700a) aufweist, der mit dem Gebläse (73) oder dem Luftkompressor verbunden ist, so dass die Luft, die durch diesen Lufteinlass (700a) mittels des Gebläses (73) oder des Luftkompressors in die aufblasbare Kammer (70a/71a) geblasen wird, das Aufblasen des oberen aufblasbaren Dichtungselements (70A) und des aufblasbaren seitlichen Dichtungselements oder der aufblasbaren seitlichen Dichtungselemente (71A) ermöglicht.

6. Zelle nach Anspruch 5, wobei das Gebläse (73) oder Luftkompressor der Aufblasmittel von den Belüftungsmitteln (4) der Zelle getrennt ist.

7. Zelle nach einem der Ansprüche 5 oder 6, wobei das Gebläse (73) oder der Luftkompressor Luft von außerhalb der Lagerzelle (1) ansaugt und in die aufblasbare Kammer (70a/71a) einbläst, wobei Luft durch eine der Wände (10, 11, 12) der Zelle, vorzugsweise durch die obere Wand (12) der Zelle geleitet wird, wobei vorzugsweise der Gebläse (73) oder der Luftkompressor durch eine der Wände (10, 11, 12) der Zelle und vorzugsweise durch die obere Wand (12) der Zelle positioniert ist und das Einblasen von Luft direkt in die aufblasbare Kammer (70a/71a) ermöglicht.

8. Zelle nach einem der Ansprüche 5 bis 7, wobei das Gebläse (73) oder der Luftkompressor in das aufblasbare obere Dichtungselement (70A; 70B) oder in ein aufblasbares seitliches Dichtungselement (71A; 71B) der aufblasbaren Dichtungsvorrichtung (7A; 7B) und vorzugsweise in das aufblasbare obere Dichtungselement (70A; 70B) integriert ist.

9. Zelle nach einem der vorhergehenden Ansprüche, wobei das obere aufblasbare Dichtungselement (70A; 70B) und jedes aufblasbare seitliche Dichtungselement (71A; 71B) separate Teile sind, die lösbar oder dauerhaft miteinander verbunden sind oder verbunden werden können, oder wobei die aufblasbare Dichtungsvorrichtung (7A/7B) aus einem einzigen Stück gebildet ist.

10. Zelle nach einem der vorhergehenden Ansprüche, wobei die aufblasbare Dichtungsvorrichtung (7A) aus einer oder mehreren aufblasbaren Dichtungshüllen insbesondere aus einer oder mehreren flexiblen Dichtungshüllen und bevorzugter aus einer oder mehreren Textilhüllen besteht, und wobei vorzugsweise das aufblasbare obere Dichtungselement eine aufblasbare obere Hülle (70A) aufweist, die an der oberen Wand (12) der Zelle befestigt ist, und jedes aufblasbare seitliche Dichtungselement eine aufblasbare seitliche Hülle (71A) aufweist, die an einer der Seitenwände (10, 12) der Zelle befestigt ist und direkt und abdichtend mit der aufblasbaren oberen Dichtungshülle (70A) unter Bildung der aufblasbaren Kammer (70a/71a) in Verbindung steht.

11. Zelle nach einem der Ansprüche 1 bis 10, wobei das aufblasbare obere Dichtungselement (70B) an der oberen Wand (12) der Zelle befestigt ist und jedes Dichtungselement aufblasbare Seitenwand (71B) an einer der Seitenwände (10 oder 11) der Zelle befestigt ist, so dass die aufblasbaren Dichtungselemente (70B; 71B) zusammen mit den Wänden der Zelle die aufblasbare Kammer (70a/71a) begrenzen.

12. Zelle nach einem der vorhergehenden Ansprüche, mit einer oberen flexiblen Dichtungsschürze (60), die an der oberen Wand (12) der Zelle befestigt ist, so dass das obere aufblasbare Dichtungselement (70A; 70B) der aufblasbaren Dichtungsvorrichtung (7A; 7B) zwischen der oberen Wand (12) und der oberen flexiblen Dichtungsschürze (60) positioniert ist, und wobei die obere flexible Dichtungsschürze (60) dazu geeignet ist, sich in Bezug auf die obere Wand (12) der Zelle und in Richtung des Inneren des Gehäuses (14) unter der Wirkung eines Luftdrucks aufzublasen, der in dem Gehäuse (14) in Gegenwart eines Satzes (2) von Produkten (20) in der Lagerzelle durch den Luftstrom (A) erzeugt wird, der durch die Belüftungsmittel (4) der Zelle und möglicherweise mit Unterstützung des oberen aufblasbaren Dichtungselements (70A; 70B) während des Aufblasens oder im aufgeblasenen Zustand gebildet wird, und/oder umfassend mindestens eine seitliche flexible Dichtungsschürze (50), die an einer der Seitenwände (10 oder 11) der aufblasbaren Zelle befestigt ist, so dass ein seitliches aufblasbares Dichtungselement (71A; 71B) der aufblasbaren Dichtungsvorrichtung (7A; 7B) zwischen dieser Seitenwand (10 oder 11) und der seitlichen flexiblen Dichtungsschürze (50) positioniert ist, und die flexible seitliche Dichtungsschürze (50) dazu geeignet ist, sich in Bezug auf die Seitenwand (10 oder 11) der Zelle und in Richtung des Inneren des Gehäuses (14) unter der Wirkung eines Luftdrucks aufzublähen, der in dem Gehäuse (14) in Gegenwart eines Satzes (2) von Produkten (20) in der Speicherzelle durch den genannten Luftstrom (A) erzeugt wird, der durch die Belüftungsmitteln (4) der Zelle und möglicherweise mit Unterstützung des aufblasbaren seitlichen Dichtungselements (71A: 71B) während der Aufblähung oder im aufgeblähten Zustand gebildet wird.

13. Speicherzelle nach Anspruch 12, mit Steuermitteln, die geeignet sind, die Belüftungsmittel (4) und die Mittel zum Aufblasen (73) der aufblasbaren Dichtungsvorrichtung (7A; 7B) automatisch zu steuern, so dass während mindestens einer Betriebsphase der Lagerzelle die Belüftungsmittel (4) in dem Gehäuse (14) einen Luftstrom (A) erzeugen, der es ermöglicht, bei Vorhandensein eines Satzes (2) von Produkten (20) in der Lagerzelle jede flexible Dichtungsschürze (60 und/oder 50) aufzublasen, wobei die aufblasbare Dichtungsvorrichtung (7A; 7B) möglicherweise, aber nicht notwendigerweise, während dieser Betriebsphase aufgeblasen wird.

14. Lagerzelle nach Anspruch 12 oder 13, mit Steuermitteln, die geeignet sind, automatisch die Belüftungsmittel (4) und die Aufblasmittel (73) der aufblasbaren Dichtungsvorrichtung (7A; 7B) zu steuern, so dass während mindestens einer Betriebsphase der Zelle die aufblasbare Dichtungsvorrichtung (7A; 7B) aufgeblasen wird und die Belüftungsmittel (4) in dem Gehäuse (14) einen Luftstrom erzeugen (B), die das Aufblasen der flexiblen Schürze(n) (60 und/oder 50) nicht erlaubt.

15. Lagerzelle nach einem der vorhergehenden Ansprüche, wobei die Belüftungsmittel (4) geeignet sind, auf nicht gleichzeitige Weise und vorzugsweise nacheinander einen Rückwärts-/Vorwärtsluftstrom (A), der von der Rückseite zu der Vorderseite des Gehäuses (14) strömt, und einen Vorwärts-/Rückwärtsluftstrom (B), der von der Vorderseite zu der Rückseite des Gehäuses (14) strömt, oder umgekehrt zu erzeugen.

16. Verwendung der Speicherzelle (1) nach einem der vorhergehenden Ansprüche, um die Temperatur einzustellen und/oder die Feuchtigkeit von mindestens eines Satzes (2) von Produkten (20), und insbesondere eines Satzes von Produkten, die auf mindestens einem Lagerträger (3) und insbesondere auf mindestens einem Lagerträger vom Typ Palette, Wagen oder Gestell angeordnet sind, und wobei die Produkte (20) vorzugsweise keine Lebensmittel oder Lebensmittel sind, insbesondere Lebensmittel aus der folgenden Liste: Milchprodukte, milchfreie Lebensmittel, fermentierter Joghurt, Bauernjoghurt, Joghurt, Dessertcreme, Käse, Obst, Gemüse, Fertiggerichte, Hefe, Kompotte, Fruchtsäfte, Milchdesserts oder andere Desserts, Butter.

17. Verfahren zum Lagern und insbesondere zum Einstellen der Temperatur und/oder der Feuchtigkeit mindestens eines Satzes (2) von Produkten (20), insbesondere einer Gruppe von Produkten, die auf mindestens einem Lagerträger (3), und insbesondere auf mindestens einem Lagerträger vom Typ Palette, Wagen oder Gestell angeordnet sind, wobei der genannte Satz (2) von Produkten (20) in dem Gehäuse (14) der Lagerzelle (1) nach einem der Ansprüche 1 bis 15 positioniert wird und dann die aufblasbare Dichtungsvorrichtung (7A; 7B) aufbläst, um direkt oder indirekt eine Abdichtung zwischen der oberen Wand (12) der Zelle und mindestens einem Teil der Oberseite (2e) des Satzes (2) von Produkten (20), die in der Zelle positioniert sind, und eine Abdichtung zwischen mindestens einer der Seitenflächen (2c oder 2d) der Zelle und mindestens einem Teil einer der Seitenflächen (2c oder 2d) des Satzes (2) von Produkten (20), die in der Zelle positioniert sind, und vorzugsweise zwischen den beiden Seitenflächen (2c oder 2d) der Zelle und mindestens einem Teil der beiden gegenüberliegenden Seitenflächen (2c; 2d) des Satzes (2) von Produkten (20) zu erreichen, und ein Rückwärts-/Vorwärtsluftstrom (A) erzeugt wird, der durch den Satz (2) der Produkte (20) von der Rückseite nach der Vorderseite der Lagerzelle (1) strömt, oder ein Vorwärts-/Rückwärtsluftstrom (B), der durch den Satz (2) der Produkte (20) von der Vorderseite zu der Rückseite der Lagerzelle (1) strömt.

## Claims

1. Cell (1A; 1B) for storing a set (2) of products (20), in particular a set of products that is arranged on at least one storage support (3), more particularly on at least one storage support of the pallet, trolley, or rack type, said cell comprising two side walls (10; 11) which face each other and are spaced apart from each other and an upper wall (12) that defines, together with the two side walls, a housing (14) for the set (2) of products (20), the housing (14) comprising an opening on the front face for the introduction and/or removal of the set of products, said cell comprising ventilation means (4) suitable for creating a rear-to-front air flow (A) that circulates in the housing (14) from the rear to the front of the housing or for creating a front-to-rear air flow (B) that circulates in the housing (14) from the front to the rear of the housing, and said cell comprising an inflatable sealing device (7A; 7B) and inflation means which allow the inflatable sealing device to be inflated, the inflatable sealing device (7A; 7B) comprising an upper inflatable sealing element (70A; 70B) and at least one side inflatable sealing element (71A; 71B) which directly or indirectly allow, in the inflated state, a sealing between the upper wall (12) of the cell and at least one part of the top face (2e) of a set (2) of products (20) positioned in the cell and a sealing between at least one side wall (10 or 11) of the cell and at least one part of one of the side faces (2c or 2d) of a set (2) of products (20) positioned in the cell, **characterized in that** the upper inflatable sealing element (70A; 70B) and the side inflatable sealing element (71A; 71B) delimit a single inflatable chamber (70a/71a) even in the absence of a set (2) of products (20) in the storage cell, and **in that** the inflation means allow the upper inflatable sealing element (70A; 70B), and the side inflatable sealing element (71A; 71B) to be inflated, even in the absence of a set (2) of products (20) in the storage cell, by blowing air into this single inflatable chamber (70a/71a).

2. Cell according to claim 1, wherein the inflatable sealing device (7A; 7B) comprises two side inflatable sealing elements (71A) which, together with the upper inflatable sealing element (70A), define said inflatable chamber (70a/71a) and which, in the inflated state, make it possible to directly or indirectly provide a seal between each side wall (10 or 11) of the cell and at least one part of each side face (2c or 2d) of a set (2) of products (20) positioned in the cell.

3. Cell according to either of the preceding claims, wherein the inflatable chamber (70a/71a) comprises at least one air inlet (700a), preferably a single air inlet (700a), so that the air blown in via this air inlet (700a) allows the upper inflatable sealing element (70A) and the one or more side inflatable sealing elements (71A) to be inflated.

4. Cell according to claim 3, wherein this air inlet (700a) is formed in the upper inflatable sealing element (70A; 70B) or in a side inflatable sealing element (71A; 71B) and is preferably positioned substantially centrally with respect to the upper inflatable sealing element (70A; 70B).

5. Cell according to any of the preceding claims, wherein the inflation means comprise at least one fan (73) or air compressor and said inflatable chamber (70a/71a) comprises at least one air inlet (700a), preferably a single air inlet (700a), which is connected to the fan (73) or to the air compressor so that the air blown into said inflatable chamber (70a/71a) through this air inlet (700a), by means of the fan (73) or the air compressor, allows the upper inflatable sealing element (70A) and the side inflatable sealing element or elements (71A) to be inflated.

6. Cell according to claim 5, wherein the fan (73) or air compressor of the inflation means is distinct from the ventilation means (4) of the cell.

7. Cell according to either claim 5 or claim 6, wherein said fan (73) or said air compressor makes it possible to draw in air outside the storage cell (1) and blow it into the inflatable chamber (70a/71a) by passing this air through one of the walls (10, 11, 12) of the cell, preferably through the upper wall (12) of the cell and preferably wherein said fan (73) or said air compressor is positioned through one of the walls (10, 11, 12) of the cell, preferably through the upper wall (12) of the cell and allows air to be blown directly into the inflatable chamber (70a/71a).

8. Cell according to any of claims 5 to 7, wherein said fan (73) or air compressor is integrated in the upper inflatable sealing element (70A; 70B) or in a side inflatable sealing element (71A; 71B) of the inflatable sealing device (7A; 7B), and is preferably integrated in the upper inflatable sealing element (70A; 70B).

9. Cell according to any of the preceding claims, wherein the upper inflatable sealing element (70A; 70B) and each side inflatable sealing element (71A; 71B) are distinct parts which are or can be detachably or permanently joined to each other or wherein said inflatable sealing device (7A/7B) is formed in one piece.

10. Cell according to any of the preceding claims, wherein said inflatable sealing device (7A) consists of one or more inflatable sealing ducts, in particular of one or more flexible sealing ducts, more particularly of one or more textile ducts, and preferably wherein the upper inflatable sealing element comprises an upper inflatable duct (70A) which is fixed to the upper wall (12) of the cell, and each side inflatable sealing element has a side inflatable duct (71A) which is fixed to one of the side walls (10, 12) of the cell and which communicates directly and in a sealed manner with the upper inflatable duct (70A) so as to form said inflatable chamber (70a/71a).

11. Cell according to any of claims 1 to 10, wherein the upper inflatable sealing element (70B) is fixed to the upper wall (12) of the cell and each side inflatable sealing element (71B) is fixed to one of the side walls (10 or 11) of the cell, such that said inflatable sealing elements (70B; 71B) delimit, together with said walls of the cell, said inflatable chamber (70a/71a).

12. Cell according to any of the preceding claims, comprising an upper flexible sealing skirt (60) which is fixed to the upper wall (12) of the cell such that the upper inflatable sealing element (70A; 70B) of the inflatable sealing device (7A; 7B) is positioned between this upper wall (12) and this upper flexible sealing skirt (60), said upper flexible sealing skirt (60) being suitable for inflating with respect to the upper wall (12) of the cell and toward the interior of the housing (14) under the effect of an air pressure which is generated in the housing (14), in the presence of a set (2) of products (20) in the storage cell, by means of said air flow (A) created by the ventilation means (4) of the cell, optionally with the assistance of the upper inflatable sealing element (70A; 70B) during inflation or in the inflated state and/or comprising at least one side flexible sealing skirt (50) which is fixed to one (10 or 11) of the side walls of the inflatable cell such that a side inflatable sealing element (71A; 71B) of the inflatable sealing device (7A; 7B) is positioned between this side wall (10 or 11) and the side flexible sealing skirt (50), the side flexible sealing skirt (50) being suitable for inflating with respect to said side wall (10 or 11) of the cell and toward the interior of the housing (14) under the effect of an air pressure which is generated in the housing (14), in the presence of a set (2) of products (20) in the storage cell, by means of said air flow (A) created by the ventilation means (4) of the cell, optionally with the assistance of the side inflatable sealing element (71A; 71B) during inflation or in the inflated state .

13. Storage cell according to claim 12, comprising control means which are suitable for automatically controlling the ventilation means (4) and the inflation means (73) of the inflatable sealing device (7A; 7B) such that, during at least one operating phase of the storage cell, the ventilation means (4) generate an air flow (A) in the housing (14) which, in the presence of a set (2) of products (20) in the storage cell, allows each flexible sealing skirt (60 and/or 50) to be inflated, the inflatable sealing device (7A; 7B) optionally, but not necessarily, being inflated during this operating phase.

14. Storage cell according to claim 12 or 13, comprising control means which are suitable for automatically controlling the ventilation means (4) and the inflation means (73) of the inflatable sealing device (7A; 7B) such that, during at least one operating phase of the cell, the inflatable sealing device (7A; 7B) is inflated and the ventilation means (4) generate an air flow (B) in the housing (14) which does not allow the flexible sealing skirt or skirts (60 and/or 50) to be inflated.

15. Storage cell according to any of the preceding claims, wherein the ventilation means (4) are suitable for creating, non-simultaneously and preferably one after the other, a rear-to-front air flow (A) that circulates from the rear to the front of the housing (14) and a front-to-rear air flow (B) that circulates from the front to the rear of the housing (14), or vice versa.

16. Use of the storage cell (1) according to any of the preceding claims for adjusting the temperature and/or the moisture content of at least one set (2) of products (20), in particular of a set of products arranged on at least one storage support (3), more particularly on at least one storage support of the pallet, trolley, or rack type, and preferably, the products (20) being non-food products or food products, more particularly food products selected from the following list: dairy food products, non-dairy food products, fermented yogurts, farm-made yogurts, other yogurt products, dessert creams, cheeses, fruits, vegetables, ready meals, yeast, compotes, fruit juices, dairy or non-dairy desserts, and butter.

17. Method for storing, more particularly for adjusting the temperature and/or moisture content of at least one set (2) of products (20), in particular of a set of products arranged on at least one storage support (3), more particularly on at least one storage support of the pallet, trolley, or rack type, during which said set (2) of products (20) is positioned in the housing (14) of the storage cell (1) according to any of claims 1 to 15, and the inflatable sealing device (7A; 7B) is then inflated so as to directly or indirectly create a seal between the upper wall (12) of the cell and at least one part of the top face (2e) of the set (2) of products (20) positioned in the cell and a seal between at least one of the side walls (2c or 2d) of the cell and at least one part of one of the side faces (2c or 2d) of the set (2) of products (20) positioned in the cell, preferably between the two side walls (2c or 2d) of the cell and at least one part of the two opposite side faces (2c; 2d) of the set (2) of products (20), and a rear-to-front air flow (A) that circulates through the set (2) of products (20) from the rear to the front of the storage cell (1) or a front-to-rear air flow (B) that circulates through the set (2) of products (20) from the front to the rear of the storage cell (1) is created.
